# EUROPEAN PATENT SPECIFICATION

(11) **EP 1 028 631 B1**
(45) Date of publication and mention of the grant of the patent: **03.07.2002**
(21) Application number: 98952877.3
(22) Date of filing: 06.11.1998
(51) Int. Cl.: A23K 1/00, A23K 1/18

(54) **SINKABLE FISH FOOD PELLETS HAVING GOOD PALATABLE PROPERTIES**
SCHMACKHAFTE SINKFÄHIGE FISCHFUTTERPELLETS
BOULETTES DE NOURRITURE POUR POISSON POUVANT ETRE IMMERGEES ET AYANT DE BONNES PROPRIETES ORGANOLEPTIQUES

(30) Priority: 08.11.1997 GB 9723615
(43) Date of publication of application: 23.08.2000
(73) Proprietor: Ewos Limited, Livingston, EH54 5DB (GB)
(72) Inventor: NISSINEN, Vesa, Juhani, Linlithgow, West Lothian EH49 7LH (GB); MANN, Jason, Jasminder, Surrey, British Columbia V3X 2E4 (CA); SNEDDON, Scott, Carluke ML8 4LH (GB)
(74) Representative: McNally, Roisin
(86) International application number: GB9803340
(87) International publication number: WO9923891

(56) References cited:
- WO-A-97/22265
- WO-A-97/40702
- WO-A-98/33393
- US-A- 4 681 758
- US-A- 5 171 588
- US-A- 5 190 775
- PATENT ABSTRACTS OF JAPAN vol. 097, no. 002, 28 February 1997 -& JP 08 275736 A (DAI ICHI KOGYO SEIYAKU CO LTD), 22 October 1996
- PATENT ABSTRACTS OF JAPAN vol. 006, no. 235 (C-136), 20 November 1982 -& JP 57 138346 A (HIROSHI YOSHINO), 26 August 1982
- PATENT ABSTRACTS OF JAPAN vol. 015, no. 297 (C-0854), 29 July 1991 -& JP 03 108451 A (DAI ICHI KOGYO SEIYAKU CO LTD), 8 May 1991
- PATENT ABSTRACTS OF JAPAN vol. 018, no. 421 (C-1234), 8 August 1994 -& JP 06 125714 A (DAICEL CHEM IND LTD;OTHERS: 01), 10 May 1994
- PATENT ABSTRACTS OF JAPAN vol. 018, no. 086 (C-1165), 14 February 1994 -& JP 05 292895 A (NISSHIN FLOUR MILLING CO LTD;OTHERS: 01), 9 November 1993
- JEAN GUILLAUME: "Les bases de la nutrition des salmonidés. III - Formulation des aliments" LA PISCICULTURE FRANÇAISE, no. 104, 1991, pages 25-42, XP002093580 FR

## Description

This invention relates to sinkable fish food pellets having good fish palatable properties and to a method for feeding fish which minimise the loss of the fish food together with providing an enhanced fish growth rate.

Certain types of fish, such as salmon, are now farmed for human consumption rather than caught solely by conventional fishing techniques. The farms include netted or otherwise segregated enclosures, which can be freshwater or seawater, and which contain the fish. The food for the fish is supplied by the fish farmer, most of the time in the form of pellets, which are regularly distributed into the enclosures.

Difficulties can arise when the fish food pellets float on the surface of the water for an appreciable amount of time, instead of sinking under the surface where they are then consumed by the fish. The floating pellets can be problematical for several reasons.

Firstly the floating pellets can be carried away by water currents, causing the farmer to have to use more food than is necessary to feed the fish. Secondly, not all fish are surface feeders and they may not take food from the surface of the water. Thirdly the floating food may attract other opportunist feeders such as seagulls; not only can this result in loss of the fish food but also the presence of the birds can scare the fish.

The two main causes of floating are water surface tension and pellet density. It has been thought for a long time that floating can be attributed solely to pellet density but more recently it has become clear that surface tension is also a major issue.

The food pellets typically contain lipids, whether plant or animal in origin, and therefore the surface of the food pellets can be significantly hydrophobic. This property enhances the effect of the surface tension of the water. It has been therefore proposed to add anti-floating agent, like molasses or surfactant to the fish food pellets in order to provide a good sinkability. However the sinkable fish food pellets that have been achieved have shown low palatability with fish.

US Patent No 5,171,588 (Ishihara et al) teaches of a method for controlling the buoyancy or sedimentation rate of fish feed pellets, by adding surfactant to the pellet. The application of the surfactant to the pellet results in dry pellets becoming rapidly soaked when exposed to water, this being effected by air cells in the pellet being expelled, with the result being an increase in the sink rate of the pellet.

Preparation of feed pellets in such a way has the associated disadvantage that the resulting pellets although having improved sinking properties become, due to the surfactant coating applied to the pellet, less palatable to the fish.

Surprisingly, it has been found that combining an anti-floating agent with a hydrophilic taste enhancer in fish food pellets gives excellent results with respect to both sinkability and palatability.

It is therefore an object of the invention to provide a method to feed fish which minimise the loss of the fish food and provide an enhanced fish growth rate.

It is a further object of the invention to provide fish food pellets which show enhanced sinkability and fish palatability.

Accordingly it is provided a method to feed fish which comprises the step of providing fish food pellets which include, together with a fish nutrient, an anti-floating agent and a taste enhancer.

According to the present invention it is also provided fish food pellets comprising a fish nutrient, at least one anti-floating agent, and at least one taste enhancer.

Preferably, the anti-floating agent is a surfactant. More preferably, the surfactant is one or more of a) Glycerol polyethylene Glycol nicinoleate, b) Glycenyl polyethylene Glycol nicinoleate, and c) polyoxyethylene sorbitan monoleate. Most preferably, the surfactant is polyoxyethylene 20 sorbitan monoleate sold under the trade mark TWEEN 80 by ICI Ltd.

Preferably, the amount of anti-floating agent contained by the fish pellets may vary between 0.05 to 5%, most preferably about 0.2 and 2 % by total weight.

It is also preferred that the taste enhancer included in the fish food pellets be a hydrolysed and purified protein concentrate from the sugar beet production and sold under the Trade Mark "Aminofin" by Finnsugar Bioproducts. The amount of Aminofin is preferably ranging from 0.1 to 2%, most preferably from 0.3 to 0.5% by total weight.

Another preferred taste enhancer is hydrolysed fish protein concentrate of the type sold by Sopropêche under the name CPSP90. The amount is same as for Aminofin.

It is also preferred that the combination of anti-floating and taste enhancer be provided as a top coating on the surface of fish food pellets.

Embodiments of the present invention will now be described by way of illustration in the following Examples.

In these examples fish pellets according to the invention have been manufactured by extrusion and a coating of fish oil applied under vacuum. These methods are currently used and known in the art. This was followed by a top coating of the anti-floating agent, taste enhancer and a small amount of fish oil onto the pellets under atmospheric pressure. It has been found advantageous to add a small amount of fish oil as the latter acts as a carrier for the anti-floating agent and taste enhancer, to ensure homogeneous distribution.

The fish oil used as a nutrient in these examples is non-winterised fish oil. These examples also use polyoxyethylene 20 sorbitan monoleate, sold under the name Tween 80 by ICI Ltd, as the anti-floating agent.

### Example 1: Influence of the combination of a floating agent and a taste enhancer upon fish food pellets sinkability.

2.5 mm dry pellets from Ewos Norway were vacuum coated with 15% fish oil followed by top coating with a mixture of 0.5% of Tween 80, 0.5% of Aminofin and 1% of total weight non-winterised fish oil. The sinkability of these pellets was compared with the sinkability of the pellets provided with a coating of different anti-floating agents, as control. Thus, some of these were coated with respectively 2% and 4% of CSB (Condensed separator By-Product) molasses. CSB molasses is a byproduct from beet molasses production having the following characteristics:

| | |
|---|---|
| Dry matter | about 70% |
| Moisture | about 30% |
| Protein* | about 17% |
| Ash* | about 23% |
| Invert sugars* | about 20% |
| Viscosity cP | about 3000 |

| | |
|---|---|
| *: percentage on dry matter basis. | |

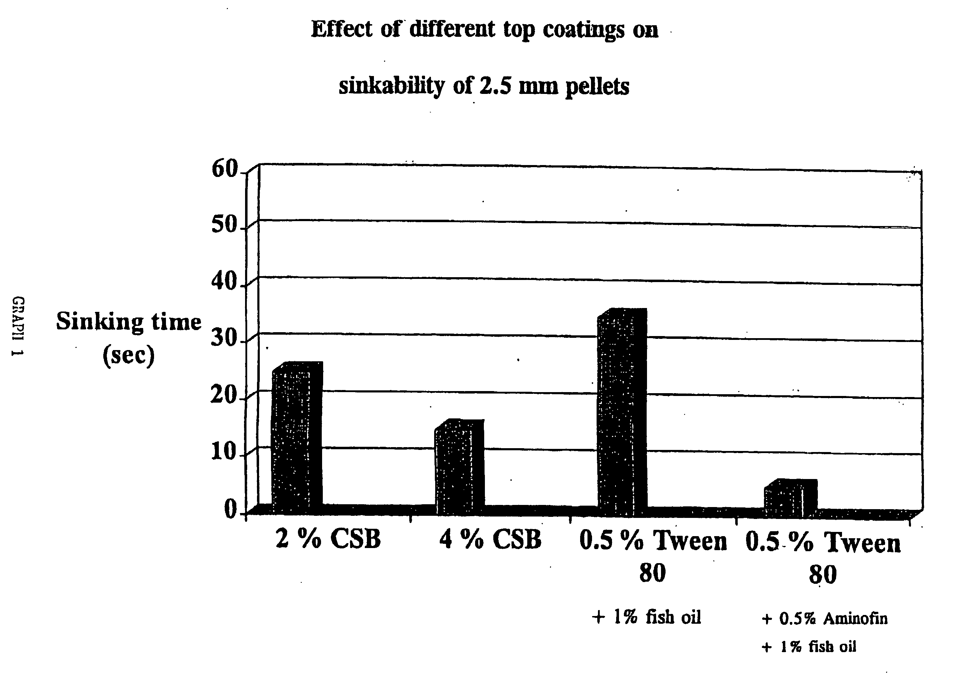

Other feed pellets were coated with a mixture of 0.5% Tween 80 and 1% non-winterised fish oil. The data for the time taken for the coated pellets to sink is shown in the accompanying Graph 1.

Graph 1 : The graph shows the time taken in seconds for each 2.5 mm pellet to sink in water with 5% salinity (NaCl), and of a temperature of about 2-3 °C.

As can be seen from this graph, the pellets according to the invention and coated with a mixture of anti-floating agent and hydrophilic taste enhancer present an unexpectedly better sinkability with respect to pellets coated with the anti-floating agents alone.

### Example 2: Influence of the combination of a floating agent and a taste enhancer upon fish food pellet palatability.

Fish food pellets were prepared using commercial 2.5mm dry pellets from Ewos Norway which were vacuum coated with 15% fish oil and then divided into three samples. One of them was top coated with 1% "Tween 80". Another was top coated with 1% "Tween 80" and 0.5% "Aminofin", accordingly to the invention. The third one was not top coated, as a control.

Three different batches of young Salmon were then prepared and weighed. Each batch was regularly fed during 58 days with one of the different kinds of the above described food pellets. The fish were weighed twice during the trial. The results of the trial are compiled in following Table 1.

**Table 1**

| **Feed Number** | **240** | **241** | **242** | |
|---|---|---|---|---|
| | **control** | **1.0% Tween 80** | **1.0% Tween 80 + 0.5% Aminofin** | |

| Period 1 : 34 days | | | | |
|---|---|---|---|---|
| Initial weight (g) | 24.09 | 23.96 | 23.96 | ns |
| Final weight (g) | 49.16^{a} | 44.92^{b} | 50.53^{a} | * |
| Standard Growth Rate 1 | 2.10^{a} | 1.85^{b} | 2.19^{a} | * |
| Feed conversion ratio 1 | 1.71^{a} | 2.02^{b} | 1.58^{a} | * |

| Period 2 : 24 days | | | | |
|---|---|---|---|---|
| Final weight (g) | 70. 54^{ab} | 68.58^{a} | 76.40^{b} | * |
| Standard growth rate 2 | 1.50 | 1.76 | 1.72 | ns |
| Feed conversion ratio 2 | 1.74 | 1.55 | 1.39 | ns |

| Overall performance : 58 days | | | | |
|---|---|---|---|---|
| Standard growth rate | 1.85^{ab} | 1.81^{a} | 2.00^{b} | * |
| Feed conversion ratio | 1.72^{ab} | 1.76^{a} | 1.48^{b} | * |

| | | | | |
|---|---|---|---|---|
| * : Significant difference at 95% probability within single standard deviation. | | | | |
| a, b : figures with single letters are statistically significantly different from each other according to the '*' criterion. | | | | |
| ns : not significant re standard deviation. | | | | |

As can be seen from the above Table 1, the standard growth rate of salmon fed with the food pellets of the invention (feed number 242) is better than the growth rate with the control pellets (240) and significantly better than the growth rate with the pellets coated with the anti-floating agent alone (241).

Also, the Feed Conversion Ratio (FCR), which is the total amount of feed used divided by total fish weight gain, (and the inverse of the Standard growth rate) is significantly better with the pellets according to the invention than with both the control and the pellets coated only with anti-floating agent.

It will be also noted that the results obtained with the pellets coated without a taste enhancer but with an anti-floating agent (feed number 241) are worse than the control.

This test demonstrated the greatly enhanced palatability and efficiency on the fish growth of the pellets of the invention with respect to known fish food pellets.

Even if pellets coated with anti-floating agent and taste-enhancer are preferred it should be noted that the invention is not restricted as this preferred embodiment. For example, the anti-floating agent and the taste enhancer can be simply mixed together with the feed components to form the final feed.

## Claims

1. A fish food pellet comprising at least one or more fish nutrients, one or more anti-floating agents, and either Aminofin (TM) (a hydrolysed and purified protein concentrate from the sugar beet production), CPSP90 (TM) (a hydrolysed fish protein concentrate), or both, as a taste enhancer.

2. A fish food pellet as claimed in Claim 1 wherein the anti-floating agent is polyoxyethylene sorbitan monoleate.

3. A fish food pellet as claimed in Claim 2 wherein the anti-floating agent is polyoxyethylene 20 sorbitan monoleate.

4. A fish food pellet as claimed in any one of Claims 1 to 3 wherein the amount of anti-floating agent in the fish pellet is between 0.05% to 5% by total weight.

5. A fish food pellet as claimed in Claim 4 wherein the amount of anti-floating agent in the fish pellet is between 0.2% and 2% by total weight.

6. A fish food pellet as claimed in any one of Claims 1 to 5 wherein the taste enhancer is a protein concentrate.

7. A fish food pellet as claimed in any one of the preceding claims in which the amount of taste enhancer in the fish pellet is between 0.1% to 2% by total weight.

8. A fish food pellet as claimed in Claim 7 wherein the amount of taste enhancer in the fish pellet is between 0.3% to 0.5% by total weight.

9. A fish food pellet as claimed in any one of the preceding claims wherein the anti-floating agent and the taste enhancer is, or is included in, a top coating on the surface of a fish nutrient core.

10. A fish food pellet as claimed in any of Claims 1 to 8 wherein the anti-floating agent and the taste enhancer is homogeneous with the or each fish nutrient.

11. A fish food pellet as claimed in any one of the preceding claims wherein the fish nutrient is fish oil.

12. A fish food pellet as claimed in any one of the preceding claims using a dry pellet core.

13. A process for preparing a fish feed pellet including one or more fish nutrients, one or more anti-floating agents, and either Aminofin (TM) (a hydrolysed and purified protein concentrate from the sugar beet production), CPSP90 (TM) (a hydrolysed fish protein concentrate), or both, as a taste enhancer, wherein the or each fish nutrient, anti-floating agent and taste enhancer are admixed together.

14. A process as claimed in Claim 13 wherein the or each fish nutrient, anti-floating agent and taste enhancer are homogeneously mixed together.

15. A process as claimed in Claim 13 wherein the or each anti-floating agent and the or each taste enhancer are added as a, or as part of a, top coating.

16. A process as claimed in Claim 15 wherein the top coating includes fish oil.

17. A process as claimed in Claim 15 or Claim 16 wherein the or each fish nutrient is coated around the pellet core prior to the top coating of anti-floating agent and taste enhancer.

18. A fish food pellet comprising at least one or more fish nutrients, one or more anti-floating agents, and one or more taste enhancers whenever prepared by a process as claimed in any one of Claims 13 to 17.

19. Use of a fish feed pellet as claimed in any one of Claims 1 to 12 and 18 to feed fish.

## Patentansprüche

1. Ein Fischfutterpellet, bestehend aus mindestens einem oder mehreren Fischnährstoffen, einem oder mehreren Anti-Schwimm-Agenzien und entweder Aminofin (TM) (ein hydrolisiertes und gereinigtes Proteinkonzentrat aus der Zuckerrübenherstellung), CPSP90 (TM) (ein hydrolisiertes Fischproteinkonzentrat) oder beides zur Geschmacksverstärkung.

2. Fischfutterpellet gemäß Anspruch 1, wobei das Anti-Schwimm-Agens Polyoxyethylen-sorbitan-monooleat ist.

3. Fischfutterpellet gemäß Anspruch 2, wobei das Anti-Schwimm-Agens Polyoxyethylen-20-sorbitan-monooleat ist.

4. Fischfutterpellet gemäß einem der Ansprüche 1 bis 3, wobei die Menge eines Anti-Schwimm-Angens in dem Fischpellet zwischen 0,05 % und 5 % des Gesamtgewichts beträgt.

5. Fischfutterpellet gemäß Anspruch 4, wobei die Menge eines Anti-Schwimm-Angens in dem Fischpellet zwischen 0,2 % und 2 % des Gesamtgewichts beträgt.

6. Fischfutterpellet gemäß einem der Ansprüche 1 bis 5, wobei der Geschmacksverstärker ein Proteinkonzentrat ist.

7. Fischfutterpellet gemäß einem der vorhergehenden Ansprüche, wobei die Menge an Geschmacksverstärker in dem Fischpellet zwischen 0,1 % und 2 % des Gesamtgewichts beträgt.

8. Fischfutterpellet gemäß Anspruch 7, wobei die Menge an Geschmacksverstärker in dem Fischpellet zwischen 0,3 % und 0,5 % des Gesamtgewichts beträgt.

9. Fischfutterpellet gemäß einem der vorhergehenden Ansprüche, wobei das Anti-Schwimm-Agens und der Geschmacksverstärker eine Deckschicht auf der Oberfläche eines Fischnährstoffkerns ist oder in dieser Deckschicht enthalten ist.

10. Fischfutterpellet gemäß einem der Ansprüche 1 bis 8, wobei das Anti-Schwimm-Agens und der Geschmacksverstärker mit dem oder jedem Fischnährstoff homogen ist.

11. Fischfutterpellet gemäß einem der vorhergehenden Ansprüche, wobei der Fischnährstoff Fischöl ist.

12. Fischfutterpellet gemäß einem der vorhergehenden Ansprüche unter Verwendung eines trockenen Pelletkerns.

13. Ein Verfahren zur Herstellung eines Fischfutterpellets, bestehend aus einem oder mehreren Fischnährstoffen, einem oder mehreren Anti-Schwimm-Agenzien und entweder Aminofin (TM) (ein hydrolisiertes und gereinigtes Proteinkonzentrat aus der Zuckerrübenherstellung), CPSP90 (TM) (ein hydrolisiertes Fischproteinkonzentrat) oder beides zur Geschmacksverstärkung, wobei der oder jeder Fischnährstoff, Anti-Schwimm-Agens und Geschmacksverstärker zusammen beigemischt sind.

14. Verfahren gemäß Anspruch 13, wobei der oder jeder Fischnährstoff, Anti-Schwimm-Agens und Geschmacksverstärker homogen zusammengemischt sind.

15. Verfahren gemäß Anspruch 13, wobei das oder jedes Anti-Schwimm-Agens und der oder jeder Geschmacksverstärker als Deckschicht oder als Teil davon zugegeben sind.

16. Verfahren gemäß Anspruch 15, wobei die Deckschicht ein Fischöl beinhaltet.

17. Verfahren gemäß Anspruch 15 oder Anspruch 16, wobei der oder jeder Fischnährstoff vor dem Auftragen der Deckschicht des Anti-Schwimm-Agens und des Geschmacksverstärkers um den Pelletkern beschichtet wird.

18. Fischfutterpellet, bestehend aus mindestens einem oder mehreren Fischnährstoffen, einem oder mehreren Anti-Schwimm-Agenzien und einem oder mehreren Geschmacksverstärkern, wenn es gemäß eines Verfahrens gemäß einem der Ansprüche 13 bis 17 hergestellt wird.

19. Die Verwendung eines Fischfutterpellets gemäß einem der Ansprüche 1 bis 12 und 18 zur Fütterung von Fischen.

## Revendications

1. Une boulette alimentaire pour poisson comprenant au moins un ou plusieurs nutriments pour poisson, un ou plusieurs agents anti-flottaison et soit de l'Aminofin (TM) (un concentré de protéines hydrolisé et purifié tiré de la production de betterave sucrière), du CPSP90 (TM) (un concentré de protéines de poisson hydrolisé), soit les deux, en tant qu'exhausteur de goût.

2. Une boulette alimentaire pour poisson telle que revendiquée dans la revendication 1 dans laquelle l'agent anti-flottaison est du monoléate sorbitane polyoxyéthylène.

3. Une boulette alimentaire pour poisson telle que revendiquée dans la revendication 2 dans laquelle l'agent anti-flottaison est du monoléate sorbitane polyoxyéthylène 20.

4. Une boulette alimentaire pour poisson telle que revendiquée dans une quelconque des revendications 1 à 3 dans laquelle la quantité d'agent anti-flottaison dans la boulette pour poisson est entre 0,05 % et 5 % en poids total.

5. Une boulette alimentaire pour poisson telle que revendiquée dans la revendication 4 dans laquelle la quantité d'agent anti-flottaison dans la boulette pour poisson est entre 0,2 % et 2 % en poids total.

6. Une boulette alimentaire pour poisson telle que revendiquée dans une quelconque des revendications 1 à 5 dans laquelle l'exhausteur de goût est un concentré de protéines.

7. Une boulette alimentaire pour poisson telle que revendiquée dans une quelconque des revendications précédentes dans laquelle la quantité d'exhausteur de goût dans la boulette pour poisson est entre 0,1 % et 2 % en poids total.

8. Une boulette alimentaire pour poisson telle que revendiquée dans la revendication 7 dans laquelle la quantité d'exhausteur de goût dans la boulette pour poisson est entre 0,3 % et 0,5 % en poids total.

9. Une boulette alimentaire pour poisson telle que revendiquée dans une quelconque des revendications précédentes dans laquelle l'agent anti-flottaison et l'exhausteur de goût constituent, ou sont inclus dans, un enrobage superficiel sur la surface d'un noyau de nutriment pour poisson.

10. Une boulette alimentaire pour poisson telle que revendiquée dans n'importe lesquelles des revendications 1 à 8 dans laquelle l'agent anti-flottaison et l'exhausteur de goût sont homogènes avec le ou chaque nutriment pour poisson.

11. Une boulette alimentaire pour poisson telle que revendiquée dans une quelconque des revendications précédentes dans laquelle le nutriment pour poisson est de l'huile de poisson.

12. Une boulette alimentaire pour poisson telle que revendiquée dans une quelconque des revendications précédentes utilisant un noyau de boulette sec.

13. Un processus de préparation d'une boulette alimentaire pour poisson incluant un ou plusieurs nutriments pour poisson, un ou plusieurs agents anti-flottaison, et soit de l'Aminofin (TM) (un concentré de protéines hydrolisé et purifié tiré de la production de betterave sucrière), du CPSP90 (TM) (un concentré de protéines de poisson hydrolisé), soit les deux, en tant qu'exhausteur de goût, dans lequel le ou chaque nutriment pour poisson, agent anti-flottaison et exhausteur de goût sont incorporés les uns dans les autres.

14. Un processus tel que revendiqué dans la revendication 13 dans lequel le ou chaque nutriment pour poisson, agent anti-flottaison et exhausteur de goût sont mélangés ensemble de façon homogène.

15. Un processus tel que revendiqué dans la revendication 13 dans lequel le ou chaque agent anti-flottaison et le ou chaque exhausteur de goût sont ajoutés sous la forme d'un, ou sous la forme d'une partie d'un, enrobage superficiel.

16. Un processus tel que revendiqué dans la revendication 15 dans lequel l'enrobage superficiel inclut de l'huile de poisson.

17. Un processus tel que revendiqué dans la revendication 15 ou la revendication 16 dans lequel le noyau de boulette est enrobé du ou de chaque nutriment pour poisson avant l'application de l'enrobage superficiel d'agent anti-flottaison et d'exhausteur de goût.

18. Une boulette alimentaire pour poisson comprenant au moins un ou plusieurs nutriments pour poisson, un ou plusieurs agents anti-flottaison, et un ou plusieurs exhausteurs de goût lorsqu'elle est préparée par un processus tel que revendiqué dans une quelconque des revendications 13 à 17.

19. Utilisation d'une boulette alimentaire pour poisson telle que revendiquée dans une quelconque des revendications 1 à 12 et 18 pour nourrir des poissons.
